# EUROPEAN PATENT APPLICATION

(11) **EP 4 691 708 A1**
(43) Date of publication of application: **11.02.2026**
(21) Application number: 24780181.4
(22) Date of filing: 25.03.2024
(51) Int. Cl.: B25J 15/04, B25J 5/00, B25J 13/08

(54) **ROBOT CONTROL SYSTEM, ROBOT, AND ROBOT CONTROL PROGRAM**

(30) Priority: 27.03.2023 JP 2023050632; 01.08.2023 JP 2023125787; 23.08.2023 JP 2023135397; 05.09.2023 JP 2023143611
(71) Applicant: SoftBank Group Corp., Tokyo 105-7537 (JP)
(72) Inventor: SON, Masayoshi, Tokyo 105-7537 (JP)
(74) Representative: DREISS Patentanwälte PartG mbB
(86) International application number: PCT/JP2024/011702
(87) International publication number: WO 2024/204063

(57) **Abstract**

A control system of a robot is a control system of a robot to which a tool is attached according to a job type with respect to an object, and which executes a job on the object, the tool being detachable at a wrist portion of an arm portion that operates in a three-dimensional manner, the control system including: a determination unit that determines a job type with respect to the object; and a control unit that controls operation of attaching the tool according to the job type determined by the determination unit and controls operation according to the job type.

## Description

### Technical Field

The present disclosure relates to a control system of a robot, the robot, and a control program of the robot.

### Background Art

In a production line of a factory, a humanoid robot for automatically performing work is used. Japanese Patent Application Laid-Open (JP-A) No. 2019-093506 discloses posture control of a humanoid robot.

In addition, WO 2011/001569 discloses a robot arm that is driven by an elastic actuator and has a plurality of joints. The robot arm is controlled by an arm-end supporting member that is placed at an arm-end portion of the robot arm and supports the robot arm by contacting a supporting surface, and a control unit that controls a force by which the arm-end supporting member and the supporting surface are made in contact with each other and simultaneously controls a position and an orientation of the arm-end portion of the robot arm.

### SUMMARY OF THE INVENTION

### Technical Problem

However, in picking work in a warehouse by a humanoid robot in the related art, for example, in a scene where cargos (such as shampoos, conditioners, cosmetics, toothpastes, cup noodles and confectionery bags having different shapes, weights, hardnesses, and fragility) are picked up from a shelf on which the cargos are displayed, and the cargos are stored in predetermined packages (such as boxes) and packed, at present, the work is relied on the human hand.

In addition, even if a structure of a gripping portion of a robot is made to correspond to the fingers, movement of the fingers and arms is slow, and thus, productivity is low. Furthermore, in a case where a job type other than gripping of the cargos is executed, the work is performed while a necessary tool (such as, for example, a drill and a screwdriver) is gripped by a gripping portion, the work becomes indirect work to which management control of a gripped state is added, and thus, a control load may increase.

In consideration of the above fact, an object of the present disclosure is to obtain a control system of a robot, the robot, and a control program for the robot capable of reducing a control load by directly executing a job of a plurality of job types including gripping of cargos by a gripping portion.

### Solution to Problem

A control system of a robot to which a tool is attached according to a job type with respect to an object, and which executes a job on the object, the tool being detachable at a wrist portion of an arm portion that operates in a three-dimensional manner, the control system including: a determination unit that determines a job type with respect to the object; and a control unit that controls operation of attaching the tool corresponding to the job type determined by the determination unit and controls operation according to the job type.

According to the first aspect of the disclosure, the control unit controls the operation of attaching the tool according to the job type determined by the determination unit that determines the job type with respect to the object, and controls the operation according to the job type.

This makes it possible to reduce a control load by directly executing jobs of a plurality of job types including gripping of cargos by the gripping portion.

A second aspect of the disclosure is characterized in that, in the first aspect, the control system includes a plurality of arm portions to which at least the tool is attachable, a tool according to the job type with respect to the object is selectively attached to one arm portion, and an auxiliary work tool capable of executing auxiliary work of main work on the object is attached to another arm portion.

A plurality of arm portions can play their respective roles (main job and auxiliary job of the main job).

According to a third aspect of the disclosure, in the second aspect, the tool according to the job type with respect to the object is selectively attached to the one arm portion, and a monitoring device that monitors a work site in conjunction with work to be executed by the attached tool is attached to the one arm portion. A plurality of arm portions can play their respective roles (main job and auxiliary job of the main job), and in the monitoring device, the work site can be monitored in conjunction with the work to be executed with the attached tool.

A fourth aspect of the disclosure is characterized in that, in the second or third aspect, the auxiliary work tool has a function of a human hand and holds the object.

It is possible to hold the object at the time of the main job and stably execute the main work.

A fifth aspect of the disclosure is characterized in that, in the fourth aspect, the auxiliary work tool includes a housing portion in which a component according to a job type of the tool to be attached to the one arm portion is housed, and the control unit executes operation according to the job type using the component housed in the housing portion. According to the fifth aspect of the disclosure, it is possible to prepare a component while holding the object at the time of the main job, so that it is possible to efficiently execute work.

A sixth aspect of the disclosure is characterized in that, in the fifth aspect, the control unit replaces the component to be used in the one arm portion with the new component housed in the housing portion in a case in which a predetermined condition is satisfied. According to the sixth aspect of the disclosure, it is possible to efficiently replace the component while executing the work.

A seventh aspect of the disclosure is characterized in that, in the invention according to any one of the second to sixth aspects, the auxiliary work tool includes a monitoring sensor tool that performs monitoring specialized for the main work on the object.

For example, it is possible to perform the work while pressing the object with the human hand, and monitor the main work with the monitoring sensor tool.

An eighth aspect according to the disclosure is characterized in that in the invention according to any one of the first to seventh aspects, the robot is a humanoid robot.

As a result of the robot being the humanoid robot, it is possible to perform work close to a human, and versatility is high.

A ninth aspect according to the disclosure is characterized in that in the invention according to any one of the first to eighth aspects, the robot is mounted on a vehicle supported on a floor surface via drive wheels.

As a result of the robot being mounted on a vehicle, it is possible to improve work efficiency in a work environment in which functionality (agility) is emphasized.

A tenth aspect according to the disclosure is characterized in that in the invention according to any one of the first to ninth aspects, the determination unit performs determination based on information from a sensor unit mounted on the tool and including a camera that captures an image of the object to identify a type of the object, and a motion processing unit that specifies a position of the object.

The camera identifies a captured object (hereinafter, may be referred to as a cargo) based on the captured image information. In other words, the camera has a role of acquiring information for specifying a type (such as a shape, a size and hardness) of the object.

The motion processing unit (MoPU) outputs vector information of motion along a predetermined coordinate axis of a point indicating an existence position of the object together with motion information as position information. In other words, the motion information output from the MoPU includes only information indicating motion (a moving direction and a moving speed) of a center point (or the center of gravity) of the object on the coordinate axis (x-axis, y-axis, z-axis). In other words, it is possible to accurately guide the gripping portion along a trajectory when the gripping portion approaches the object.

An eleventh aspect according to the disclosure is the invention according to any one of the first to tenth aspect, including an individual control unit that performs operation control of each of the robots, the individual control unit performing control to attach the tool according to the job type determined by the determination unit and controlling operation according to the job type; and a coordination control unit that performs operation control of causing a plurality of the robots to coordinate with each other, at least causes one of a plurality of the robots to hold the object and causes a plurality of the robots to execute operation of a plurality of job types on the held object in time series.

According to the eleventh aspect of the disclosure, the individual control unit performs operation control of each of the robots, attaches the tool according to the job type determined by the determination unit and controls the operation according to the job type.

On the other hand, the coordination control unit performs operation control of causing a plurality of robots to coordinate with each other, and at least causes one robot among the plurality of robots to hold the object and causes the plurality of robots to perform operation of a plurality of job types on the held object in time series.

This makes it possible to reduce a control load by directly executing jobs of a plurality of job types including gripping of cargos by the gripping portion.

Note that the coordination control unit may be configured such that control devices of the same functions are mounted on all the robots and synchronized with each other, or may be configured (that is, a configuration having a master-slave relationship) by a main device mounted on a specific robot and a sub device mounted on a robot other than the specific robot and operated by a command from the main device.

A twelfth aspect of the disclosure is characterized in that, in the eleventh aspect, the tool for holding the object has a function of a human hand and holds the object by gripping.

A thirteenth aspect of the disclosure is characterized in that, in the eleventh aspect or the twelfth aspect, in a case in which a plurality of the robots is caused to execute work, the coordination control unit causes a plurality of the robots to execute operation of a plurality of job types at the same time on condition that interference does not occur.

A fourteenth aspect of the disclosure is characterized in that, in any one of the eleventh to thirteenth aspects, when one robot among the robots holds the object with a tool attached to one arm portion, in a case in which it is necessary to replace a tool attached to the other arm portion, the coordination control unit performs control such that another robot holds the object instead of the one robot.

A robot according to a fifteenth aspect of the disclosure is a robot to which a tool is attached according to a job type with respect to an object, and which executes a job on the object, the tool being detachable at a wrist portion of an arm portion that operates in a three-dimensional manner, the robot including a sensing unit that specifies positions of the object and the tool.

A robot according to a sixteenth aspect of the disclosure is characterized in that, in the fifteenth aspect, the robot includes a plurality of arm portions which operates in a three-dimensional manner and to which at least a work tool is attachable, and executes a job on an object, a tool according to a job type with respect to the object is selectively attached to one arm portion, and a monitoring device that monitors a work site in conjunction with work to be executed by the attached tool is attached to the one arm portion, and an auxiliary work tool capable of executing auxiliary work of main work on the object is attached to another arm portion.

A control program of a robot according to a seventeenth aspect of the disclosure causes a computer to operate as each unit in the invention according to any one of the first to fourteenth aspects.

Note that the above summary of the present disclosure does not enumerate all the necessary features of the disclosure. Further, a sub-combination of these features can also be the present disclosure.

### Advantageous Effects of Invention

As described above, according to the present disclosure, an effect is provided that a control load can be reduced by directly executing work of a plurality of job types including gripping of a cargo by a gripping portion.

### BRIEF DESCRIPTION OF DRAWINGS

Fig. 1 is a front view of a humanoid robot according to a first embodiment.
Fig. 2 is a side view of the humanoid robot according to the first embodiment.
Fig. 3A is a plan view illustrating a state in which a robot tool is attached to the humanoid robot according to the first embodiment.
Fig. 3B is a plan view illustrating a state in which a robot tool is attached to the humanoid robot according to the first embodiment.
Fig. 3C is a plan view illustrating a state in which a robot tool is attached to the humanoid robot according to the first embodiment.
Fig. 3D is a plan view illustrating a state in which a robot tool is attached to the humanoid robot according to the first embodiment.
Fig. 4A is a perspective view illustrating a work situation with the robot tools corresponding to Figs. 3A to 3D.
Fig. 4B is a perspective view illustrating a work situation with the robot tools corresponding to Figs. 3A to 3D.
Fig. 4C is a perspective view illustrating a work situation with the robot tools corresponding to Figs. 3A to 3D.
Fig. 4D is a perspective view illustrating a work situation with the robot tools corresponding to Figs. 3A to 3D.
Fig. 5 is a view schematically illustrating an example of a functional configuration of the humanoid robot according to the first embodiment.
Fig. 6 is a flowchart indicating procedure of gripping control when a cargo is gripped by a gripping portion in conjunction with entire operation of the humanoid robot.
Fig. 7 is a control flowchart indicating details of a robot tool application processing subroutine.
Fig. 8 is a plan view of a humanoid robot according to a modification (Modification 1) of the first embodiment.
Fig. 9A is a plan view illustrating a work process by flow operation to which the humanoid robot according to Practical Example 1 of the first embodiment is applied.
Fig. 9B is a perspective view illustrating a work process by flow operation according to a comparative example of Practical Example 1.
Fig. 10A is a front view of an arm according to a second embodiment.
Fig. 10B is a front view of the robot tool attachable to the arm.
Fig. 10C is a front view of the robot tool attachable to the arm.
Fig. 10D is a front view of the robot tool attachable to the arm.
Fig. 11 is a perspective view of an arm according to a modification (Modification 2) of the second embodiment.
Fig. 12 is a perspective view of an arm according to a modification (Modification 3) of the second embodiment.
Fig. 13 is a perspective view illustrating a work situation in an EV manufacturing line using the arm according to the second embodiment.
Fig. 14A is a perspective view illustrating a work situation in an EV manufacturing line using an arm according to Practical Example 2 of the second embodiment and work in an engine room (drive unit room).
Fig. 14B is a perspective view illustrating a work situation in the EV manufacturing line using the arm according to Practical Example 2 of the second embodiment and work in a vehicle interior.
Fig. 15A is a schematic view according to Practical Example 3 of the second embodiment, and is a perspective view of a process of inspecting an attached state after a seat belt device is attached to a vehicle body.
Fig. 15B is a schematic view according to Practical Example 3 of the second embodiment, and is an enlarged view of a portion to be inspected (pillar portion) in the vehicle body.
Fig. 16 is a view schematically illustrating an example of a hardware configuration of a computer functioning as a central brain.

### DESCRIPTION OF EMBODIMENTS

Hereinafter, embodiments of the present disclosure will be described, but the following embodiments do not limit the disclosure. In addition, not all combinations of features described in the embodiments are essential to the solution of the present disclosure.

### (First Embodiment)

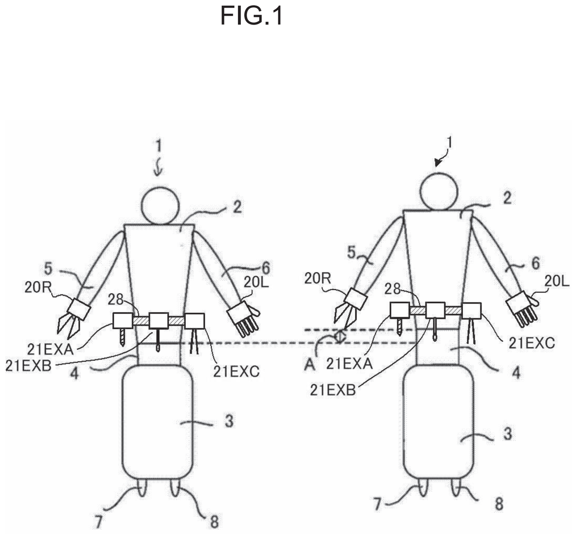

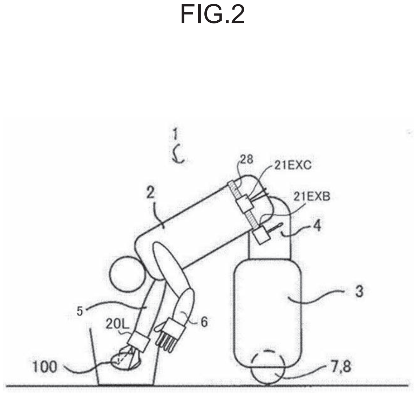

Fig. 1 is a front view of a humanoid robot 1 according to a first embodiment. As illustrated in Fig. 1, the humanoid robot 1 of the first embodiment includes an upper body portion 2, a leg portion 3, and a coupling portion 4 that rotatably couples the upper body portion 2 to the leg portion 3. For example, the humanoid robot 1 is disposed in a production line of a factory and performs work on an object 100 (see Fig. 2).

In a case in which the work is picking work of gripping a cargo which is the object 100, the object (such as a falling object) on the production line or on the floor is gripped. Note that gripping work includes packing for housing the gripped object 100 in a predetermined housing (such as cardboard) in addition to picking of gripping the object 100 from a shelf.

The upper body portion 2 has two arm portions 5, 6. The arm portions 5, 6 are rotatably attached to the left and right of the upper body portion 2. Robot tools 20L, 20R (to be described in detail later) for performing predetermined work on the object 100 are attached to distal ends of the arm portions 5, 6. Note that the number of arm portions is not limited to two, and may be one or three or more.

The leg portion 3 has two wheels 7, 8 attached to a lower portion of the leg portion 3, and the leg portion 3 is movable on a floor on which the humanoid robot 1 is disposed.

The coupling portion 4 rotatably connects the upper body portion 2 and the leg portion 3. Thus, the upper body portion 2 can tilt forward and backward with respect to the leg portion 3. Thus, as illustrated in Fig. 2, the humanoid robot 1 of the first embodiment can tilt the upper body portion 2 forward with respect to the leg portion 3 to pick up the object 100 placed on the shelf, the object 100 placed on the floor, and the object 100 dropped on the floor during the work.

The leg portion 3 has a balance function for preventing the humanoid robot 1 from falling when the upper body portion 2 tilts forward or backward with respect to the leg portion 3 or the humanoid robot 1 moves.

Furthermore, as illustrated in Fig. 1, the coupling portion 4 has a function of changing a distance between the upper body portion 2 and the leg portion 3. Thus, a position of the upper body portion 2 in a vertical direction with respect to the leg portion 3 can be adjusted as indicated by an arrow A so as to match a height of a workbench in the production line.

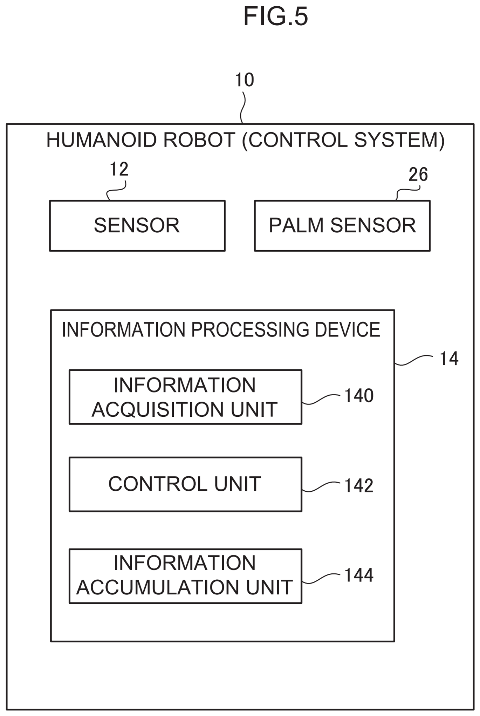

Further, driving of the humanoid robot 1 of the first embodiment is controlled by a control system 10 (see Fig. 5) mounted in the humanoid robot 1.

### (Structure of Robot Tools 20L, 20R)

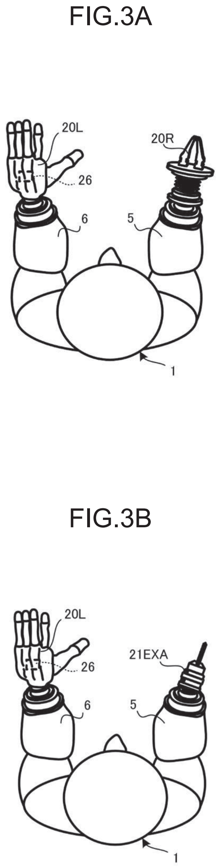

As illustrated in Fig. 3A, the robot tool 20L attached to a distal end of the arm portion 6, which corresponds to the left hand of a human, has the same hand structure as that of the human (Intelligent Hand System), and mainly performs auxiliary work such as pressing the object 100 so as not to move during the work with the robot tool 20R.

As illustrated in Fig. 3A, the robot tool 20R attached to a distal end of the arm portion 5, which corresponds to the right hand of a human, is a tool for executing specific work.

The robot tools 20L, 20R are coupled to the arm portions 6, 5 by a universal joint structure, and are attached to the arm portions 6, 5 so as to be rotatable in a three-dimensional manner. More specifically, the wrist can be rotated (twisted) and moved up and down (cocked), and the wrist can be extended and contracted as necessary.

In addition, the robot tool 20R attached to at least the arm portion 5 is detachable from the arm portion 5, and can be replaced with a robot tool 21EX to be described later.

The robot tool 20L attached to the arm portion 6 is not to be attached/detached, but may be detachable similarly to the robot tool 20R.

The arm portion 5 is replaced with a tool for executing the instructed work. On the other hand, the arm portion 6 is positioned as an auxiliary work tool having a role (such as, for example, a role of supporting the object 100 so as to assist gripping of the object 100 and a role of pressing the object 100 so as not to move when the object 100 is processed) of assisting execution of the instructed work.

Note that in the humanoid robot 1 of the first embodiment, the robot tool 20R is detachably attached to the right arm portion 5 that is the dominant arm of the human while the robot tool 20L (auxiliary work tool) having the structure of the human hand is attached to the left arm portion 6 that is not the dominant arm in the structure corresponding to the right-handed person. Alternatively, the humanoid robot 1 of the first embodiment may have the structure (in which the auxiliary work tool (human hand) is provided on the arm portion 5, and the work tool is provided on the arm portion 6) corresponding to the left-handed person.

### (Robot Tool 20L)

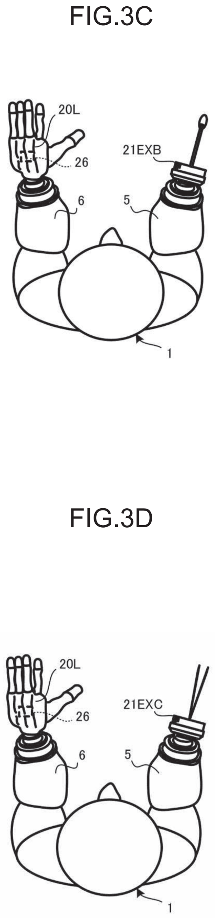

As illustrated in Fig. 3, the robot tool 20L according to the first embodiment includes a palm portion as a base portion corresponding to a so-called human palm, and five finger portions each including a plurality of joints are attached to the palm portion. Note that in the first embodiment, the number of fingers of the robot tool 20L is five, but finger structures having different numbers of fingers such as three fingers may be used.

A palm sensor 26 is attached to the palm portion. A high-resolution camera constituting the palm sensor 26 according to the first embodiment identifies what the captured object 100 is, whether the object is a care product such as shampoo, conditioner, cosmetic, or toothpaste, or a food product such as a cup noodle or a confectionery bag, based on the captured image information.

In other words, the high-resolution camera has a role of acquiring information for specifying a type (such as a shape, a size and hardness) of the object 100.

On the other hand, the MoPU constituting the palm sensor 26 of the first embodiment together with the high-resolution camera outputs, for example, at a frame rate of 1000 frames/second or more, motion information indicating captured motion (in this case, movement relative to the arm portions 5, 6) of the object 100 from an image of the object 100 captured at a frame rate of 1000 frames/second or more. Note that the frame rate may be increased in the case of detecting the moving object 100, and the frame rate may be decreased in the case of detecting a fixed object (the object 100 that does not move).

The MoPU outputs vector information of motion along a predetermined coordinate axis of a point indicating the existence position of the object 100 as motion information. In other words, the motion information output from the MoPU does not include information necessary for identifying what the captured object 100 is (the care product, the food), and includes only information indicating the motion (a moving direction and a moving speed) of the center point (or the center of gravity) of the object 100 on the coordinate axis (x-axis, y-axis, z-axis).

In other words, it is possible to accurately guide the robot tool 20 along a trajectory when the robot tool 20 approaches the object 100.

Information output from the palm sensor 26 including the high-resolution camera and the MoPU is supplied to an information processing device 14. The information processing device 14 functions as a determination unit, a control unit, and the like, of the present disclosure.

Note that the palm sensor 26 (the high-resolution camera and the MoPU) is illustrated as being located at a place closest to work, but it is not essential to attach it to the palm. For example, the high-resolution camera and the MoPU may be attached to the back of the hand or the wrist. In order to grasp the work in a bird's-eye view, the high-resolution camera and the MoPU may be attached to a head portion of the humanoid robot 1 in Fig. 3. Further, the high-resolution camera and the MoPU may be attached to a plurality of positions.

The information processing device 14 specifies the position of the object 100 with high accuracy based on the information from the palm sensor 26 including the high-resolution camera and the MoPU, calculates a degree of spread of the finger portion at the time of gripping, strength at the time of gripping, suction force by a suction pad, and the like, accurately controls minute movement of the arm portions 5, 6 and the robot tool 20, and can support picking work of various objects 100.

### (Robot Tool 20R and Robot Tool 21EX)

In the first embodiment, the main purpose is to grip the object 100 using the robot tool 20R as a job type with respect to the object 100.

On the other hand, there is a case where the job type with respect to the object 100 is not gripping but another job type (for example, gripping of heavy objects, drilling with a drill, wiping off dirt, handling of fine objects (tweezer work), and the like).

In this case, it is also possible to grip tools corresponding to various kinds of jobs with the robot tool 20R and face the object 100, but in a case in which the same job type is continuously executed, a control load of maintaining the gripped state (relative position control between the gripping portion and the gripping tool, and the like) is large.

Thus, in the first embodiment, as illustrated in Figs. 3B to 3D, the robot tool 21EX (in the first embodiment, three types of 21EXA, 21EXB, 21EXC) is provided in place of the robot tool 20R (see Fig. 3A) which is a basic tool attached to the arm portion 5 according to the job type with respect to the object 100, and the robot tool 20R is replaced with the robot tool 21EX as necessary to execute the job according to the job type different from the gripping of the object 100.

### (Storage Example of Robot Tool 21EX)

As illustrated in Fig. 1, in the humanoid robot 1, a belt 28 is attached to a lower portion (so-called a waist position) of the upper body portion 2, and a holder (not illustrated) that detachably holds each of three robot tools 21EXA, 21EXB, 21EXC is attached to the belt 28.

Although three robot tools 21EX are illustrated in Fig. 1, the number of the robot tools 21EX that can be attached instead of the robot tool 20R may be one type, two types, or four or more types, and the number of robot tools 21EX to be attached may be determined according to an attribute of the object 100 to be described later.

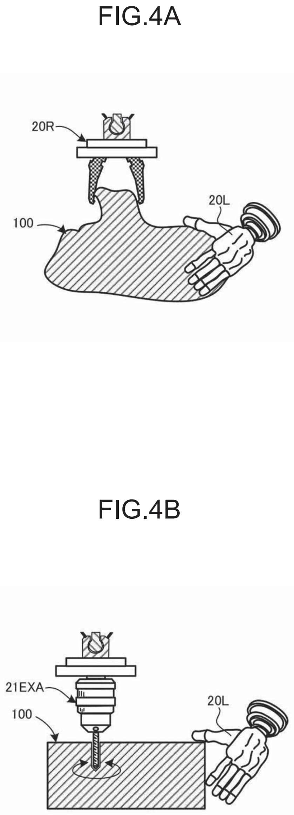

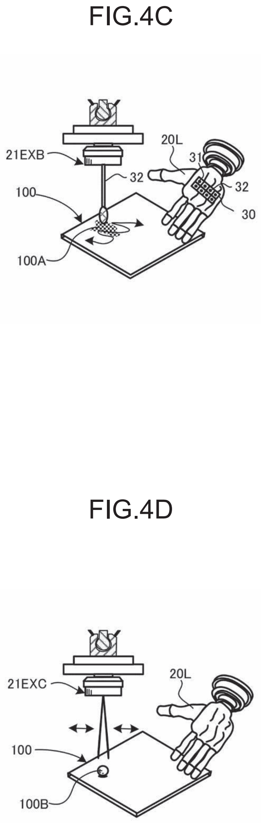

Figs. 3 and 4 illustrate detailed configurations of the robot tool 20R and the robot tool 21 (21EXA, 21EXB, 21EX) that can be attached to the arm portion 5 instead of the robot tool 20R, and a relationship between the detailed configurations and the application.

Figs. 3A and 4A illustrate a gripped state of the object 100 with the robot tool 20R which is a basic tool of the robot tool. The job type of the robot tool 20R is gripping similarly to the robot tool 20L, but the robot tool 20R has a structure capable of gripping a special object 100 (overweight, or the like) that is difficult to be gripped with the robot tool 20L.

In other words, the robot tool 20R has a structure similar to that of a fork to be applied as an attachment of heavy machine, for example. In the first embodiment, the robot tool 20R has a two-finger structure, and the two fingers are opened and closed by a pressure supplied from a pressure source via a pipe, so that strength for gripping the object 100 is enhanced although versatility is lower than the gripping operation (robot tool 20L) by the motor, or the like.

During the work with the robot tool 20R, the robot tool 20L presses the object 100 so as not to move.

As illustrated in Figs. 3B and 4B, the job type of the robot tool 21EXA is drilling, and a drill is attached as a tool. A drill blade having a predetermined diameter size can be detachably attached to the drill, and the drill blade is attached in advance in accordance with a hole size for drilling the object 100.

During the work with the robot tool 21EXA, the robot tool 20L presses the object 100 so as not to move.

As illustrated in Figs. 3C and 4C, the job type of the robot tool 21EXB is wiping of dirt, and a cotton swab (for example, a cotton bud) is attached thereto.

The robot tool 21EXB has a structure in which a dirt site 100A adhering to a surface of the object 100 pressed by the robot tool 20L can be wiped off by moving the cotton swab to the left and right while bringing the cotton swab into contact with the dirt site.

During the work with the robot tool 21EXB, the robot tool 20L presses the object 100 so as not to move.

Here, as illustrated in Fig. 4C, the robot tool 20L includes a housing portion 30 in which a component 32 corresponding to the job type of the robot tool (for example, the robot tool 21EXB) to be attached to the arm portion 5 is housed, on the back side of the hand. The housing portion 30 is detachably attached to the robot tool 20L. In Fig. 4C, as an example, the component 32 is a cotton swab.

As illustrated in Fig. 4C, the housing portion 30 is a rectangular parallelepiped box member having an upper surface that is open. A plurality of plate portions 31 is provided inside the housing portion 30, and a space for housing each component 32 is formed by the plate portions 31. In Fig. 4C, as an example, eight components 32 (cotton swabs) are housed in the housing portion 30 in a state where part of them is exposed from an upper end of the housing portion 30.

Then, the information processing device 14 executes operation according to the job type of the robot tool using the component 32 housed in the housing portion 30 as a function of the control unit of the present disclosure. In the case illustrated in Fig. 4C, the information processing device 14 attaches the component 32 housed in the housing portion 30 to the robot tool 21EXB, and executes work of wiping dirt using the component 32.

Furthermore, as a function of the control unit of the present disclosure, in a case where a predetermined condition is satisfied, for example, in a case where a use period of the component 32 exceeds a predetermined period, the information processing device 14 replaces the component 32 used in the arm portion 5 with a new component 32 housed in the housing portion 30. Specifically, the information processing device 14 replaces the component 32 by performing the following control.

First, based on satisfaction of the predetermined condition, the information processing device 14 causes the robot tool 20L to remove the component 32 mounted on the robot tool 21EXB, and places the removed component 32 at a predetermined place. Next, the information processing device 14 brings the robot tool 21EXB close to the component 32 housed in the housing portion 30, and fits a new component 32 into a hole portion (not illustrated) of the robot tool 21EXB, the hole portion being exposed by removing the component 32. As a result, the replacement of the component 32 used in the arm portion 5 and the component 32 housed in the housing portion 30 is completed.

With the above configuration, the component 32 can be prepared while the object 100 at the time of the main job is held by the robot tool 20L, so that the work can be efficiently executed. In addition, with the above configuration, the component 32 can be efficiently replaced while the work is being executed. Note that, in the above description, the component 32 has been described as a cotton swab using Fig. 4C as an example, but the component 32 is not limited thereto. For example, the component 32 may be any component as long as it corresponds to the job type of the robot tool attached to the arm portion 5, such as a drill blade of the robot tool 21EXA illustrated in Fig. 4B or a pair of tweezers of the robot tool 21EXC illustrated in Fig. 4D.

As illustrated in Figs. 3D and 4D, the job type of the robot tool 21EXC is tweezer work of pinching and removing a fine object, and a pair of tweezers (tweezers) is attached as a tool. Examples of the dirt of the fine object include a solder paste in the case of attaching an electronic component on an electric substrate, a welding material residue after welding in the case of welding metal, and the like.

The robot tool 21EXC has a structure in which a fine object 100B such as dust adhering to the surface of the object 100 pressed by the robot tool 20L can be picked up and removed with the pair of tweezers. Note that examples of the dust, and the like, include scraps generated at the time of drilling by a drill. Note that the present disclosure is also applicable to removal of a screw, or the like, entering a narrow groove.

During the work with the robot tool 21EXC, the robot tool 20L presses the object 100 so as not to move.

In addition, although not mounted on the humanoid robot 1 in the first embodiment, robot tools of other job types such as a spray gun for coating, an electric drill, an engraving knife, a writing instrument, and discharge of a molding agent for 3D modeling may be mounted as the robot tools.

For example, the spray gun is one of pistol-shaped coating devices to be used in spray coating. The spray gun has a structure in which a coating material is atomized using compressed air of a compressor (not illustrated) and ejected from a distal end of the spray gun, and can perform coating on a surface to be coated without unevenness.

Here, in the first embodiment, the processing is executed by selecting an optimum robot tool 20R and a robot tool 21EX based on the job type (see Table 1) and replacing the robot tool 20 with the selected robot tool 21.

**[Table 1]**

| Job type of cargo | Robot tool type | Characteristics |
|---|---|---|
| Special gripping | Robot tool 20 | Two-claw fork |
| Drilling | Robot tool 21EXA | Drill blade |
| Wiping | Robot tool 21EXB | Cotton swab |
| Gripping | Robot Tool 21EXC3 | Tweezer |
| ... | ... | ... |

Note that although the palm sensor 26 is attached to the robot tool 20L, a sensor having a function equivalent to that of the palm sensor 26 may be attached to each robot tool 21EX.

Fig. 5 is a schematic view illustrating an example of the control system 10 of the humanoid robot 1 according to the first embodiment. The control system 10 includes the sensor 12 mounted on the humanoid robot, the palm sensor 26 including the high-resolution camera and the MoPU, and the information processing device 14.

The sensor 12 sequentially acquires information indicating at least a distance and an angle between the object 100 which is located around the humanoid robot 1 and on which the humanoid robot 1 performs work, and the arm portions 5, 6. As the sensor 12, a highest-performance camera, a solid-state LiDAR, a multi-color laser coaxial displacement meter, or various other sensor groups can be adopted. In addition, examples of the sensor 12 include a vibratory meter, a thermo camera, a hardness meter, radar, LiDAR, a high-pixel, telephoto, ultra-wide angle, 360 degrees, high-performance camera, vision recognition, fine sound, ultrasonic wave, vibration, infrared ray, ultraviolet ray, electromagnetic wave, temperature, humidity, spot AI weather forecast, high-accuracy multi-channel GPS, low-altitude satellite information, long tail incident AI data, and the like.

Note that in addition to the above information, the sensor 12 detects an image, a distance, vibration, heat, odor, color, sound, ultrasonic wave, ultraviolet ray, infrared ray, and the like. In addition, examples of the information detected by sensor 12 include movement of the center of gravity of the humanoid robot 1, detection of a material of the floor on which humanoid robot 1 is installed, detection of an outside air temperature, detection of outside air humidity, detection of vertical and lateral oblique inclination angles of the floor, and detection of moisture content.

The sensor 12 performs these kinds of detection, for example, every nanosecond.

The palm sensor 26 (the high-resolution camera and the MoPU) is a sensor provided in the robot tool 20L of the arm portions 5, 6, and has a camera function of capturing an image of the object 100 and a position specifying function of specifying the position of the object 100 separately from the sensor 12.

Note that, in a case in which one MoPU is used, it is possible to acquire vector information of motion of a point indicating an existence position of the object 100 along each of the two coordinate axes (the x axis and the y axis) in a three-dimensional orthogonal coordinate system. Using the principle of a stereo camera, vector information of the motion of the point indicating the existence position of the object 100 along each of the three coordinate axes (x axis, y axis, z axis) in the three-dimensional orthogonal coordinate system may be output using two MoPUs. The z-axis is an axis along a depth method (traveling of the vehicle). Further, the z axis may be an axis along the depth direction which is an imaging optical axis direction.

The information processing device 14 includes an information acquisition unit 140, a control unit 142, and an information accumulation unit 144.

The information acquisition unit 140 acquires information of the object 100 detected by the sensor 12 and the palm sensor 26 (the high-resolution camera and the MoPU).

The control unit 142 uses the information acquired by the information acquisition unit 140 from the sensor 12 and artificial intelligence (AI) to control rotation operation of the coupling portion 4, movement operation in the vertical direction, operation of the arm portions 5, 6, and the like.

Furthermore, the control unit 142 grasps the type (such as a shape, a size and hardness) and the position of the object 100 in detail using the information acquired by the information acquisition unit 140 from the palm sensor 26 (the high-resolution camera and the MoPU), and performs control to face the object 100 according to the outer shape and position, and grip the object 100, for example (gripping control).

For example, the control unit 142 executes the following processing as the entire operation.
(1) The coupling portion 4 is driven so that the object 100 on the shelf and the floor can be picked up, and the upper body portion 2 is tilted forward or backward.
(2) The arm portions 5, 6 and the gripping portion are driven so as to be able to grip the object 100.
(3) The upper body portion 2 is driven up and down with respect to the leg portion 3 so as to match the height of the workbench of the production line.
(4) In order to prevent the humanoid robot 1 from falling, balance is taken.
(5) Driving of the wheels 7, 8 is controlled such that the humanoid robot 1 can push a cart, or the like.

The work in the first embodiment will be described below.

### (Job Control on Object 100)

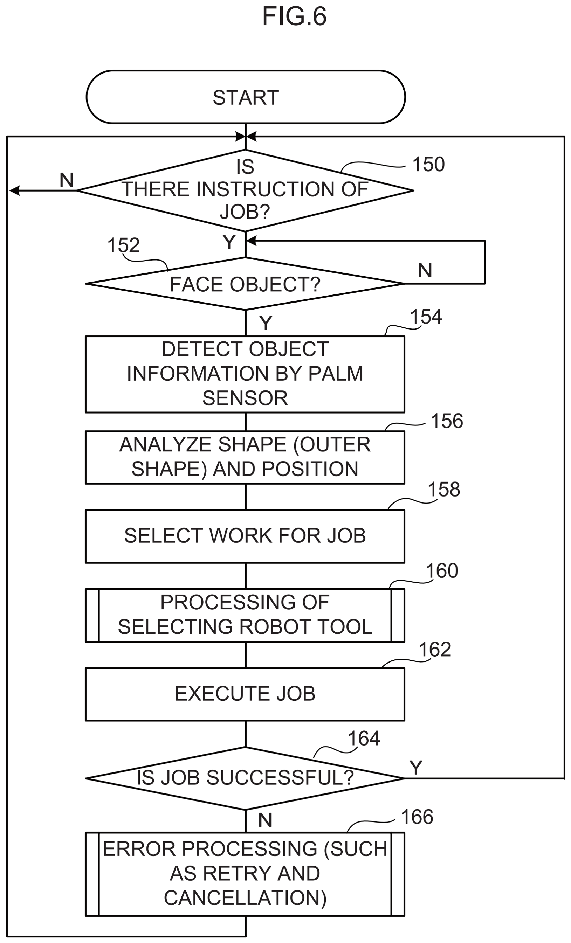

Fig. 6 is a flowchart indicating procedure of job control when the robot tool 20 executes a job targeted for the object 100.

In step 150, whether or not an instruction of the job with respect to the object 100 is made is determined, and when an affirmative determination result is obtained, the process proceeds to step 152, the humanoid robot 1 is moved (for example, the arm portions 5, 6 are operated), the palm side is made to face the object 100, and the process proceeds to step 154.

In step 154, the robot tool 20L is made to face the object 100, and the palm sensor 26 (the high-resolution camera and the MoPU) detects information on the object 100.

In the next step 156, the detection information by the palm sensor 26 is analyzed to grasp the type (such as a shape, a size and hardness) and the position of the object 100 in detail, and the process proceeds to step 158.

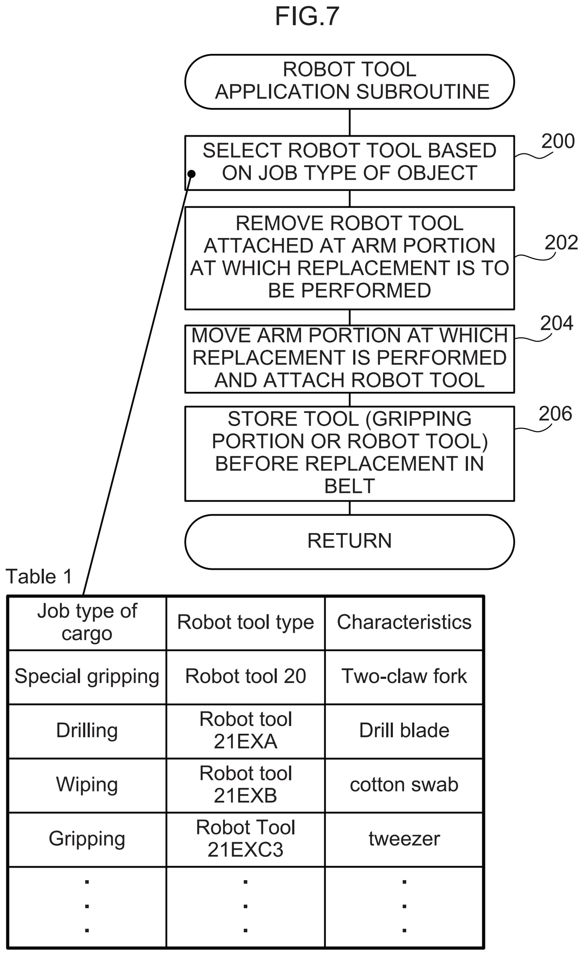

In step 158, work (job type) of a job targeted for the object 100 is selected. Next, the process proceeds to step 160 to execute selection processing (for details, refer to Fig. 7) of the robot tools 20R, 21EXA, 21EXB, 21EXC according to an attribute of the object 100, and the process proceeds to step 162.

In step 162, a job (for example, in the case of the robot tool 20R, gripping of a heavy object) targeted for the object 100 is executed.

In the next step 164, it is determined whether or not the job on the object 100 has succeeded, and when an affirmative determination result is obtained, post-processing (post-processing of carrying the gripped object 100 to a predetermined place in a case in which the object 100 is gripped) is executed, and the process proceeds to step 150 and waits for an instruction of the job on the next object 100.

In addition, in a case in which a negative determination result is obtained in step 164, the process proceeds to step 166, error processing is executed, and the process returns to step 150.

The palm sensor 26 including the high-resolution camera and the MoPU is attached to the robot tool 20L, and thus, the job situation can be grasped in real time. Even if the job is unsuccessful, quick response (troubleshooting) is possible.

Furthermore, the palm sensor 26 (the high-resolution camera and the MoPU) is mounted on the palm side, and thus, the object 100 can be captured with high accuracy, and it is possible to support work that makes minute movement.

### (Details of Robot Tool Application Processing)

Fig. 7 is a control flowchart indicating details of a robot tool application processing subroutine.

In step 200, the robot tool 20R or 21EXA, 21EXB, 21EXC, ... is selected based on the job type with respect to the object 100 (see Table 1).

In other words, as indicated in Table 1, the type of the necessary robot tool 20R or 21EXA, 21EXB, 21EXC, ... is determined according to the job type with respect to the object 100.

Note that selection of the type of the robot tool based on the job type with respect to the object 100 indicated in Table 1 is an example, and may be determined based on the type and the number of possessed robot tools.

In the first embodiment, three types of robot tools 21EXA, 21EXB, 21EXC are attached to the belt 28, and thus, a total of four types of robot tools 20, 21EXA, 21EXB, 21EXC by adding the robot tool 20R are selected. However, it is also possible to increase the number of robot tools 21 to be attached to the belt 28 or select the robot tools from various types of robot tools 21 and attach the robot tools to the belt 28 in advance depending on the work site. Further, different types of robot tools 21EX may be mounted on the humanoid robot 1.

In the next step 202, the tool (usually, the robot tool 20R is used, but another robot tool 21EXA, 21EXB, or 21EXC may already be mounted) attached to the arm portion 5 at which replacement is to be performed is removed using the robot tool 20L attached to the arm portion 6.

In the next step 204, the arm portion 5 at which replacement is to be performed is moved to the position of the belt 28 and the robot tools 21EXA, 21EXB, 21EXC are worn.

In the next step 206, the robot tool originally attached to the arm portion 5 at which replacement is performed, gripped by the arm portion 6 at which replacement is not performed is stored in a holder of the belt 28, and this routine ends.

As described above, in the first embodiment, in addition to the job control by the robot tools 20, 21EXA, 21EXB, 21EXC, for example, the robot tools 20R, 21EXA, 21EXB, 21EXC are prepared according to the job type with respect to the object 100.

This makes it possible to eliminate a control load (load related to relative position control between the robot tool 20 and the tool, and the like) generated by performing a job while holding the tool necessary for the job type with the robot in the form of a human hand in the gripping portion of the comparative example by directly mounting the robot tools 21EXA, 21EXB, 21EXC.

### (Modification 1 "First Embodiment")

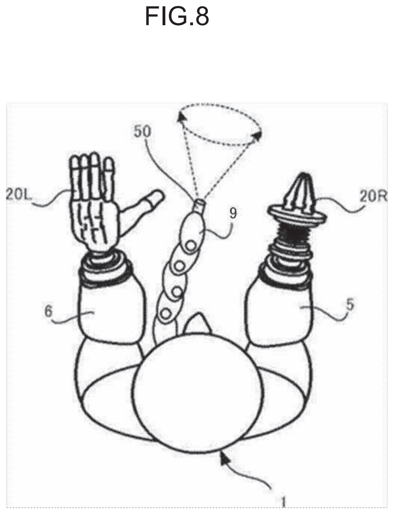

In the humanoid robot 1 of the first embodiment, similarly to the so-called human, the two arm portions 5, 6 (the right arm portion 5 and the left arm portion 6) are held, and the robot tool 20R (21EXA, 21EXB, 21EXC) is attached to each arm portion. Alternatively, as illustrated in Fig. 8, an arm portion 9 dedicated to monitoring may be attached, and the work may be executed while the work is monitored by the camera 50 attached to a distal end portion.

The arm portion 9 has a so-called snake structure, can approach the object 100 from a gap between the arm portions 5, 6, and can cover a blind spot region of the palm sensor 26.

### (Practical Example 1 "First Embodiment")

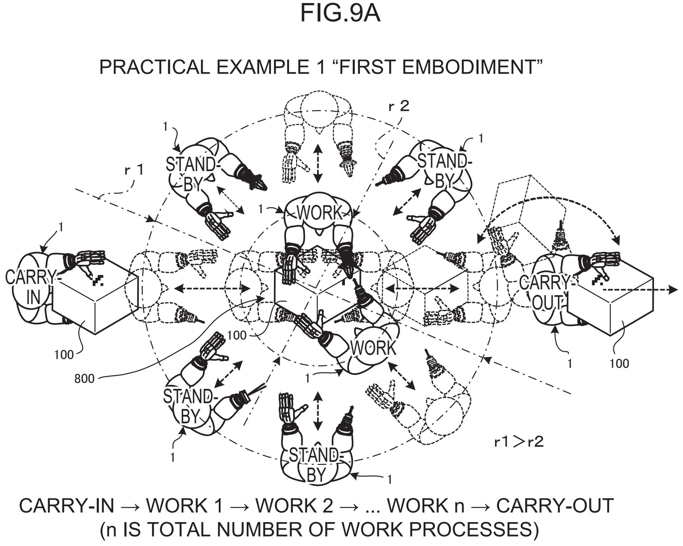

Fig. 9A is a plan view illustrating a work place 800 according to Practical Example 1 of the first embodiment in which a plurality of humanoid robots 1 described in the first embodiment (including Modification 1) is applied to execute a series of work including a plurality of work processes.

In Practical Example 1, the work place 800 in which the object 100 of the work is fixedly disposed is provided. In the work place 800, the object 100 is carried in from a left direction in Fig. 9A by the humanoid robot 1 for carry-in.

Further, from the work place 800, the object 100 on which the work (a plurality of work processes) is completed is carried out by the humanoid robot 1 for carry-out in a right direction in Fig. 9A.

In the work place 800, a plurality of (here, six bodies) humanoid robots 1 for work is arrayed in a ring shape around except for carry-in and carry-out routes.

In Practical Example 1, the humanoid robot 1 is classified into a robot for carry-in, a robot for carry-out, and a robot for work, but the humanoid robot 1 is classified according to a role, and the humanoid robot 1 has the same form. In other words, the humanoid robots 1 for carry-in and carry-out can participate in the work at the work place 800. In addition, the carry-in route and the carry-out route may be the same.

In Practical Example 1, it is also possible to employ a configuration in which the humanoid robot 1 for carry-in and carry-out does not participate in the work at the work place 800, and a tool (robot tool 20L) equivalent to a human hand may be attached to both hands so that the object 100 can be easily held.

The respective humanoid robots 1 can perform work independently and share position information with each other. Further, when the respective humanoid robots 1 execute a common work process program to be executed at the work place 800, the humanoid robots 1 execute respective work processes assigned based on the work process program in time series.

In other words, a position of a radius r1 of the work place 800 is set as a position (hereinafter, referred to as a standby position) of the humanoid robot 1 that does not execute the work, and a position of a radius r2 (r1 > r2) of the work place 800 is set as a position (hereinafter, referred to as a work position) of the humanoid robot 1 that executes the work.

When the robot 1 for carry-in carries in the object 100, all the humanoid robots 1 for work are at the standby position. Among the humanoid robots 1 for work, when the object 100 is carried into the work place 800, one of the humanoid robots 1 corresponding to a work process number moves to the work position. In this movement, the humanoid robots 1 do not interfere with each other (contact, collision, or the like) based on the work process program.

At least one humanoid robot 1 grips (holds) the object 100 at the work place 800, and at least another humanoid robot 1 performs the predetermined work in a state where the object 100 is held.

Although the work is different depending on the number of work processes (total number n) and the work type, in Practical Example 1, a plurality of kinds of work can be executed in a single work place 800 regardless of the total number n of work processes.

In other words, when work 1 is completed, the humanoid robot 1 for work in charge of work 1 moves to the standby position, and then the humanoid robot 1 for work in charge of work 2 moves to the work position to execute the work 2.

Next, when work n-1 ends, the humanoid robot 1 for work in charge of work 2 moves to the standby position, and then the humanoid robot 1 for work in charge of work n moves to the work position to perform the work n.

In this manner, the humanoid robot 1 for work moves back and forth between the standby position and the work position for each work process, so that a plurality of work processes can be executed and the object 100 can be carried out without causing interference even at a single work place 800.

The humanoid robot 1 for carry-in or the humanoid robot 1 for carry-out may hold the object 100.

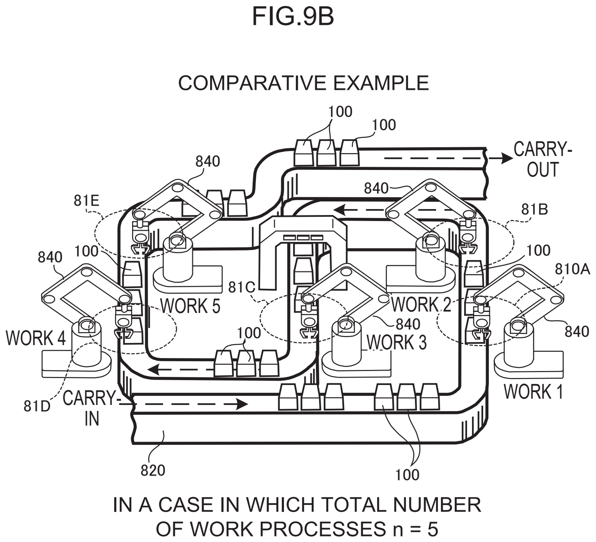

Fig. 9B is a perspective view illustrating a work process by flow operation according to a comparative example of Practical Example 1.

Generally, in a case in which a plurality of work processes is required as in the comparative example, the object 100 is moved by a belt conveyor 820, and a plurality of work places (in the comparative example of Fig. 9B, work places 810A to 81E) is set at positions along a moving direction of the object 100 by the belt conveyor 820. A robot arm 840 is arranged at each of the work places 810A to 81E, and the work (work 1 to work 5) by each robot arm 840 is executed in synchronization with a conveyance timing of the object 100 by conveyance by the belt conveyor 820, and the object 100 is carried out.

As described above, in the comparative example, it is necessary to move the object 100 to the work places 810A to 81E corresponding to the total number of work processes by the belt conveyor 820, and a conveyance length is required by a work place interval × (the number of work processes - 1) by simple calculation. In Fig. 9B, a conveyance path of the belt conveyor 820 has a crank shape, and thus, a work space is relatively narrow, but in the case of a linear work path, the work space corresponding to the conveyance length is required.

On the other hand, in Practical Example 1 in Fig. 9A, the humanoid robots 1 of a plurality of kinds of work sequentially approach one work place 800 to perform the work, so that the work space can be reduced. In addition, the single work place 800 is provided, so that it is also possible to execute a plurality of work processes at the same time, and work efficiency is improved.

According to Practical Example 1 of the first embodiment, the hand tool can be replaced, so that it is possible to maximally utilize a single humanoid robot 1 having a plurality of functions.

In other words, it is not necessary to move the object 100 for each work process, and the plurality of humanoid robots 1 cooperate with each other to simultaneously perform a plurality of different kinds of work while gripping the object 100, which allows the work efficiency to be improved. The object 100 is never placed on the floor, and the humanoid robot 1 can perform the work while gripping the object 100.

Note that in the single humanoid robot 1, in a case in which a plurality of kinds of work is performed while one of the arm portions 5, 6 holds the object 100, the hand tool needs to be replaced in the middle of the work. In this case, by another humanoid robot 1 gripping the object 100, one humanoid robot 1 can replace the hand tool of one arm portion 5 (or 6) with the hand tool of the other arm portion 6 (or 5) of the one humanoid robot 1.

For example, in a chair making work process, two work processes can be performed by the single humanoid robot 1 by, while one humanoid robot 1 performing screwing (work 1) and sticking the cloth (work 2), the other humanoid robot 1 gripping the object 100 when the tool is replaced.

### (Second Embodiment)

Hereinafter, a second embodiment of the present disclosure will be described. Note that the same components as those in the first embodiment are denoted by the same reference numerals, and description of the components will be omitted.

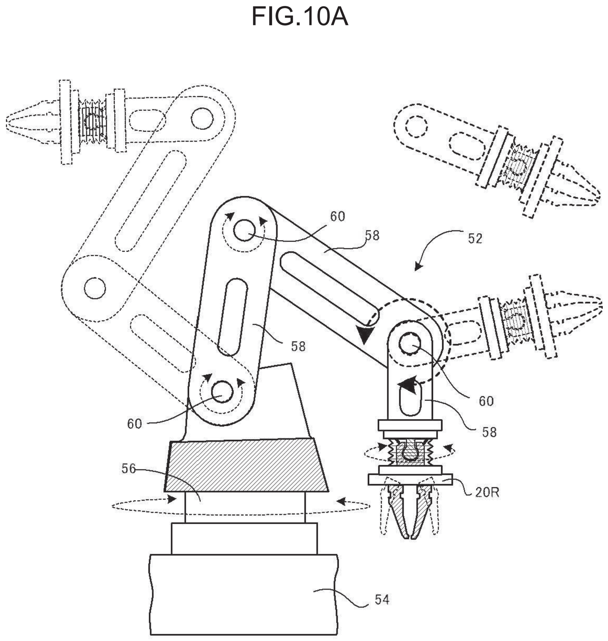

As illustrated in Fig. 10A, features of the second embodiment are not the humanoid robot 1 but a movable arm 52 in which a distal end is detachable according to the job type.

The movable arm 52 is attached to a base 54 via a rotatable cylindrical support 56, for example, in a line of an assembly factory.

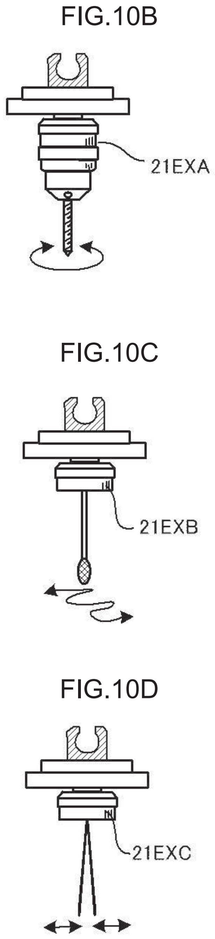

In the movable arm 52, a plurality of coupling members 58 is coupled via a joint shaft portion 60, and the robot tool 20R (21EXA (see Fig. 10B), 21EXB (see Fig. 10C), 21EXC (see Fig. 10D)) attached to distal end portions in the x-axis, y-axis, and 0-axis directions can be moved to a desired position including rotational operation with respect to the base 54.

In addition, the robot tool 20R (21EXA, 21EXB, 21EXC) itself can also operate in a three-dimensional manner.

According to the movable arm 52 of the second embodiment, it is possible to perform work of a plurality of job types by replacing the robot tool 20R (21EXA, 21EXB, 21EXC) instead of a single job type on the line of the assembly factory.

In this case, it is possible to execute a series of operation in one line process, such as gripping the object 100 by the robot tool 20R, moving the object 100 to a predetermined workbench, executing drilling operation on the object after replacing the robot tool with the robot tool 21EXA, wiping off dirt of a drilled portion in place of the robot tool 21EXB, and removing scraps remaining around the drilled portion in place of the robot tool 21EXC, so that it is possible to perform the operation with a line length of 1/4 of that in the related art by simple calculation.

### (Modification 2 "Second Embodiment")

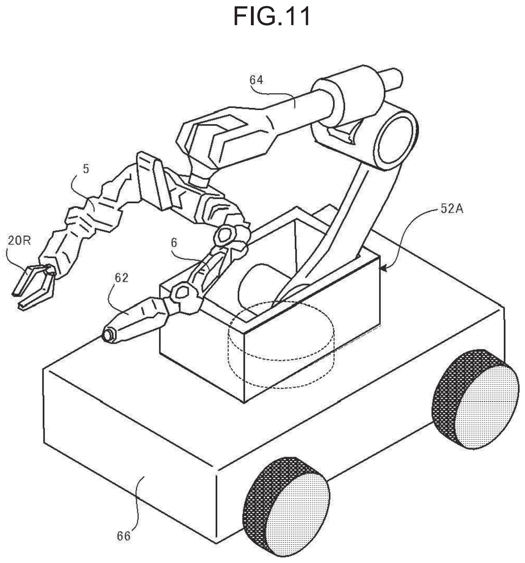

In the second embodiment, a tool corresponding to one job type is attached to one robot tool 20R (21EXA, 21EXB, 21EXC). However, as illustrated in Fig. 11, in a movable arm 52A according to Modification 1 of the second embodiment, tools corresponding to two job types may be attached to one robot tool 20R (21EXA, 21EXB, 21EXC).

In Fig. 11, one tool is a two-claw tool (robot tool 20R) for gripping a heavy object attached to the arm portion 5, and the other tool is a local sensor tool 62 attached to the arm portion 6. The arm portions 5, 6 are bifurcated from a main coupling portion 64, which operates in common, and can operate independently.

As a result, during work with the robot tool 20R, video information, and the like, specialized for the work (for example, gripping of a heavy object) of the robot tool 20R can be acquired from the local sensor tool 62.

In addition, in Fig. 11, the movable arm 52A is mounted on a vehicle 66 that can travel, and thus, the movable arm can go to a site where the work is required by the movable arm itself instead of being fixedly arranged on the line of the assembly factory. It is therefore possible to perform more versatile work.

### (Modification 3 "Second Embodiment")

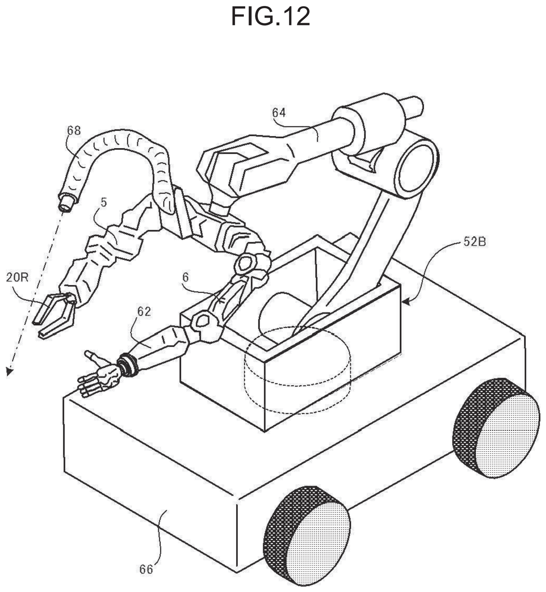

In Fig. 12, in a movable arm 52B according to Modification 2 of the second embodiment, similarly to the humanoid robot 1 (see Fig. 8) according to Modification 1 of the first embodiment, the robot tool 20L in a shape of a human hand and the robot tool 20R (21EXA, 21EXB, 21EXC) that is detachable and replaceable according to a plurality of job types are attached, and a camera (snake camera 68) that is deformable in a snake shape is attached.

As a result, during the work with the attached robot tool 20R (21EXA, 21EXB, 21EXC), video information, and the like, specialized for the work can be acquired from the snake camera 68.

In addition, the movable arm 52B is mounted on a travelable vehicle 66, so that the movable arm can have mobility more excellent in footwork than a humanoid robot as long as it is in a region where the vehicle 66 can travel (such as a factory having a flat floor surface).

### (Practical Example 2 "Second Embodiment")

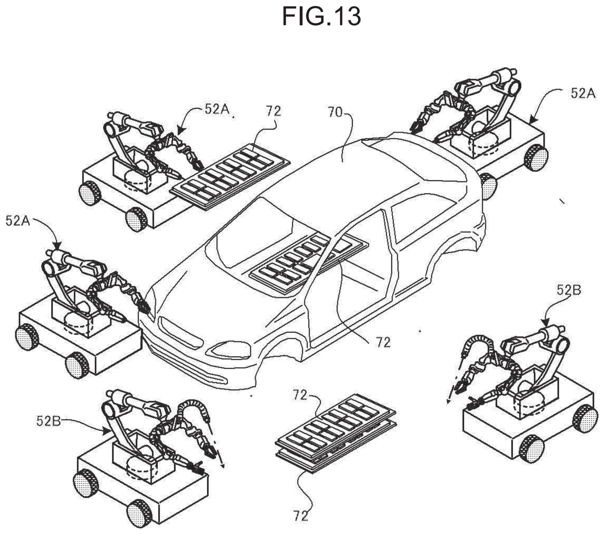

Fig. 13 is a perspective view schematically illustrating an assembly line of an electric vehicle (EV) using the movable arm 52 (in particular, the movable arm 52A according to Modification 2 and the movable arm 52B according to Modification 3) according to the second embodiment.

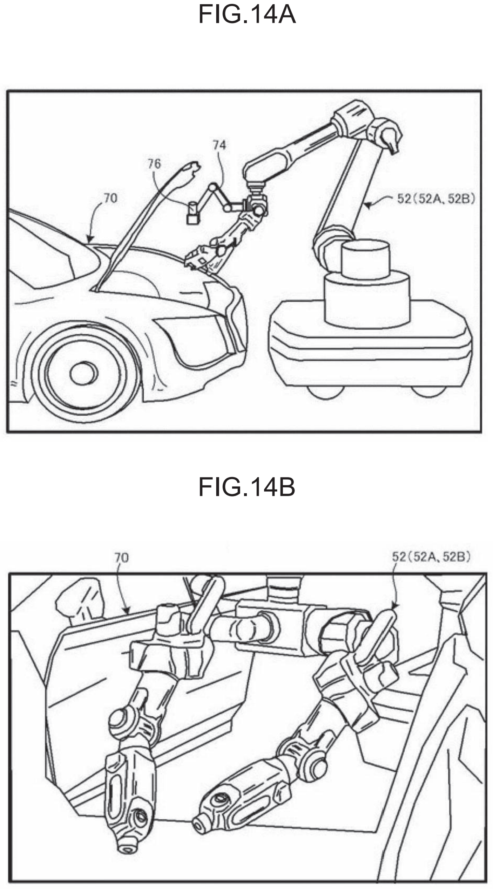

The process indicated in Figs. 14A and 14B is a process of mounting a lithium ion battery 72 unique to the EV on a vehicle body 70.

As in the movable arm 52, the movable arm 52A, and the movable arm 52B, if a robot tool such as articulated joints, a long body, a long neck, or fingers is used, even in manufacturing of the EV, or the like, it is possible to perform work in a place that cannot be reached by a robot arm in the related art, such as complicated cable connection or screw fastening in the vehicle body 70, instead of a human.

In addition, it is known as a well-known technique that a vehicle assembly robot such as a welding robot performs quick and accurate work by computer control. However, in recent years, attachment of the lithium ion battery 72 and wiring work as in the EV become work with higher precision and accuracy than ever before. It is therefore necessary to strengthen confirmation and monitoring during the work in addition to programmed operation control (sequence control) as in a current work robot.

In this regard, the robot according to the present embodiment capable of performing flexible camerawork can be said to be a robot optimal for EV.

Fig. 14A is a perspective view illustrating work in an engine room (in an EV, it is a space in which a drive unit such as a motor is disposed, and may be referred to as a drive unit room) of the vehicle body 70.

The work with the robot rule 20R (21EXA, 21EXB, 21EXC) attached to the two arm portions 5, 6 is executed by an execution camera while the work is monitored in real time by the camera (MoPU) 76 attached to the distal end of the arm 74. A joint portion of the movable arm 52 (52 A, 52B) is rotatable in a range of 360°, and it is also possible to reduce a control load by defining a rotation range according to property of the work.

Fig. 14B is a perspective view illustrating work in a vehicle interior of the vehicle body 70.

As also illustrated in Fig. 13, there is a case where the lithium ion battery 72 is disposed along the floor of the vehicle interior, and in this case, in particular, in a case where the vehicle body 70 is a monocoque body, there is a case where a space for allowing the work arm to enter the vehicle interior from the outside is limited.

Even in such a case, work such as attachment and wiring of the lithium ion battery 72 is facilitated by utilizing a robot (the movable arm 52, the movable arm 52A, and the movable arm 52B) including articulated joints, a long body, a long neck, fingers, and the like.

### (Practical Example 3 "Second Embodiment")

Practical Example 3 of the second embodiment illustrates a configuration in which work and inspection are simultaneously performed, and monitoring of a defective product is performed by image recognition from all directions (in 360 degree direction in a three-dimensional manner).

For example, if a tool and a camera are attached to the right hand (arm portion 5), it is also possible to monitor a defective product while holding the object with the left hand (arm portion 6) and performing assembly with the right hand (arm portion 5). In particular, monitoring of assembly of the vehicle needs to be performed inside the vehicle, and thus, a human needs to perform the monitoring. However, a robot hand can perform the monitoring without omission and accurately. Of course, regarding the work and the monitoring, the left and right hands may be reversed, or the arm portion 9 illustrated in Fig. 8 may be used.

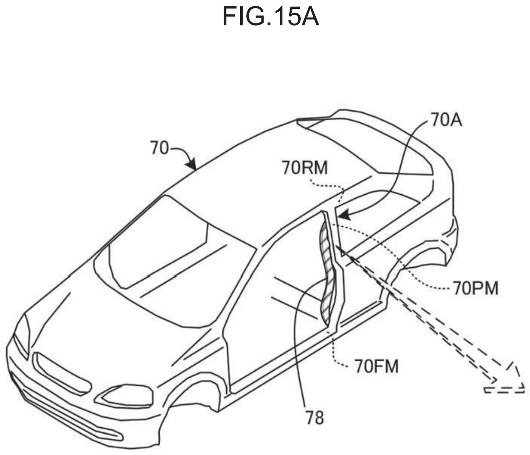

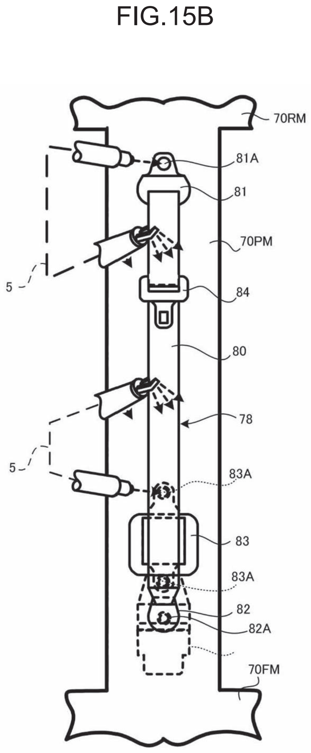

Fig. 15A is a perspective view of a process of inspecting an attached state after a seat belt device 78 is attached to the vehicle body 70, and Fig. 15B is an enlarged view of a portion to be inspected (pillar portion) in the vehicle body 70.

As illustrated in Fig. 15A, the seat belt device 78 is attached along a pillar portion 70A of the vehicle body 70. The vehicle body 70 is provided with a pillar member 70PM, a roof member 70RM, and a floor member 70FM as rigid members.

The pillar member 70PM has an upper end fixed to the roof member 70RM and a lower end fixed to the floor member 70FM.

As illustrated in Fig. 15B, the seat belt device 78 includes a belt-shaped webbing 80 for restraining a body of a seated person on a seat, a shoulder anchor 81 for holding an upper end side of the webbing 80, a wrap anchor 82 for holding a lower end portion, a retractor 83 for holding the other end side of the webbing 80 so as to be capable of being wound up and pulled out, and a slip joint 84 for pulling out the webbing 80 for attachment to a waist, a shoulder, or the like, of an occupant.

The shoulder anchor 81 is fixed to the pillar member 70PM with a mounting bolt 81A. Further, in the pillar member 70PM, attachment portions of the wrap anchor 82 and the retractor 83 of the seat belt device 78 are set close to each other, a reinforcing member that reinforces the attachment portions together is provided, and the wrap anchor 82 and the retractor 83 are both fixed to the reinforcing member via attachment bolts 82A, 83A.

In the right hand (arm portion 5), in order to confirm the attachment state of the seat belt device 78, the webbing 80 is pulled while being gripped, and the attachment states of the attachment bolts 81A, 82A, 83A are monitored.

As specific operation, the webbing 80 of the seat belt device 78 is pulled with a tool (holding tool), and an image of details of the attachment bolts 81A, 82A, 83A is closely captured with a camera to perform monitoring. If there is looseness, additional fastening work is performed.

Note that damage of the webbing 80 and appearance states of the attachment bolts 81A, 82A, 83A are mainly monitored, but tightening torque of the attachment bolts 81A, 82A, 83A may be measured by attaching a bolt socket, or the like.

According to Practical Example 3 of the second embodiment, by utilizing a robot tool such as articulated joints, a long body, a long neck, or fingers like the arm portions 5, 6, it is possible to accurately monitor the attachment state of the seat belt device 78 directly related to safety instead of a human. In particular, it is possible to check a defective product while holding the object with the left hand (arm portion 6) and performing assembly with the right hand (arm portion 5), and it is possible to shorten a work period by simultaneously performing the attachment work and the monitoring work. In addition, check of the vehicle assembly needs to be performed inside the vehicle, and thus, a human needs to perform the work, but the robot hand can accurately perform the check without omission as compared with the check by a human.

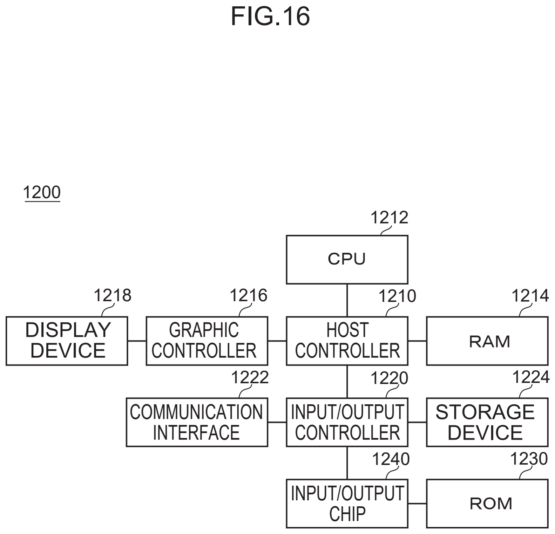

Fig. 16 schematically illustrates an example of a hardware configuration of a computer 1200 that functions as the information processing device 14. The program installed in the computer 1200 can cause the computer 1200 to function as one or more "units" of the device according to each embodiment, or cause the computer 1200 to execute the operation associated with the device according to each embodiment or the one or more "units", and/or cause the computer 1200 to execute the process according to each embodiment or the step of the process. Such a program may be executed by the CPU 1212 to cause the computer 1200 to perform certain operation associated with some or all of blocks in the flowcharts and block diagrams described herein.

The computer 1200 according to each embodiment includes the CPU 1212, a RAM 1214, and a graphic controller 1216, which are mutually connected by a host controller 1210. The computer 1200 also includes input/output units such as a communication interface 1222, a storage device 1224, a DVD drive, and an IC card drive, which are connected to the host controller 1210 via an input/output controller 1220. The DVD drive may be a DVD-ROM drive, a DVD-RAM drive, or the like. The storage device 1224 may be a hard disk drive, a solid state drive, or the like. The computer 1200 also includes an input/output unit such as a ROM 1230 and a keyboard, which are connected to the input/output controller 1220 via an input/output chip 1240.

The CPU 1212 operates according to programs stored in the ROM 1230 and the RAM 1214, thereby controlling each unit. The graphics controller 1216 obtains image data generated by the CPU 1212 in a frame buffer, or the like, provided in the RAM 1214 or itself, and causes the image data to be displayed on a display device 1218.

The communication interface 1222 communicates with other electronic devices via a network. The storage device 1224 stores programs and data to be used by the CPU 1212 in the computer 1200. The DVD drive reads a program or data from a DVD-ROM, or the like, and provides the program or data to the storage device 1224. The IC card drive reads a program and data from and/or writes a program and data to the IC card.

The ROM 1230 stores therein a boot program, and the like, to be executed by the computer 1200 at the time of activation, and/or a program dependent on hardware of the computer 1200. The input/output chip 1240 may also connect various input/output units to the input/output controller 1220 via a USB port, a parallel port, a serial port, a keyboard port, a mouse port, or the like.

The programs are provided by a computer-readable storage medium such as a DVD-ROM or an IC card. The programs are read from a computer-readable storage medium, installed in the storage device 1224, the RAM 1214 or the ROM 1230 which is also an example of a computer-readable storage medium, and executed by the CPU 1212. The information processing described in the programs is read by the computer 1200 and provides coordination between the programs and the various types of hardware resources. The device or method may be configured by implementing operation or processing of information according to use of the computer 1200.

For example, in a case in which communication is performed between the computer 1200 and an external device, the CPU 1212 may execute a communication program loaded in the RAM 1214 and instruct the communication interface 1222 to perform communication processing based on processing described in the communication program. Under the control of the CPU 1212, the communication interface 1222 reads transmission data stored in a transmission buffer area provided in a recording medium such as the RAM 1214, the storage device 1224, the DVD-ROM, or the IC card, transmits the read transmission data to the network, or writes reception data received from the network to a reception buffer area, or the like, provided on the recording medium.

In addition, the CPU 1212 may cause the RAM 1214 to read all or a necessary portion of a file or database stored in an external recording medium such as the storage device 1224, a DVD drive (DVD-ROM), an IC card, or the like, and may execute various types of processing on data on the RAM 1214. Next, the CPU 1212 may write back the processed data to the external recording medium.

Various types of information such as various types of programs, data, tables, and databases may be stored in a recording medium and subjected to information processing. The CPU 1212 may execute various types of processing on the data read from the RAM 1214, including various types of operation, information processing, condition determination, conditional branching, unconditional branching, information retrieval/replacement, and the like, which are described throughout the present disclosure and specified by a command sequence of a program, and writes back the results to the RAM 1214. In addition, the CPU 1212 may search for information in a file, a database, or the like, in the recording medium. For example, in a case in which a plurality of entries each having an attribute value of a first attribute associated with an attribute value of a second attribute is stored in the recording medium, the CPU 1212 may search for an entry in which the attribute value of the first attribute matches a specified condition from the plurality of entries, read the attribute value of the second attribute stored in the entry, and thereby acquire the attribute value of the second attribute associated with the first attribute satisfying the predetermined condition.

The program or software module described above may be stored in a computer-readable storage medium on the computer 1200 or in the vicinity of the computer 1200. Furthermore, a recording medium such as a hard disk or a RAM provided in a server system connected to a dedicated communication network or the Internet can be used as a computer-readable storage medium, thereby providing a program to the computer 1200 via the network.

The blocks in the flowcharts and block diagrams in the embodiments may represent steps of a process in which operation is performed or "units" of a device that are responsible for performing the operation. Certain stages and "units" may be implemented by dedicated circuitry, programmable circuitry provided with computer-readable instructions stored on a computer-readable storage medium, and/or a processor provided with computer-readable instructions stored on a computer-readable storage medium. The dedicated circuitry may include digital and/or analog hardware circuits, and may include integrated circuits (ICs) and/or discrete circuits. The programmable circuitry may include reconfigurable hardware circuitry including, for example, logical AND, logical OR, exclusive OR, NAND, NOR, and other logical operations, flip-flops, registers, and memory elements, such as field programmable gate arrays (FPGA) and programmable logic arrays (PLA).

A computer-readable storage medium may include any tangible device capable of storing instructions for execution by a suitable device, such that a computer-readable storage medium having instructions stored thereon includes a product including instructions that may be executed to create means for performing the operation specified in the flowcharts or block diagrams. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-Ray disk, a memory stick, an integrated circuit card, and the like.

A computer-readable instruction may include either source code or object code written in any combination of one or more programming languages, including an assembler instruction, an instruction-set-architecture (ISA) instruction, a machine instruction, a machine-dependent instruction, microcode, a firmware instruction, state-setting data, or an object oriented programming language such as Smalltalk ^{®}, JAVA ^{®}, C++, or the like, and procedural programming languages in the related art, such as the "C" programming language or similar programming languages.

The computer-readable instruction may be provided for a processor of a general-purpose computer, special purpose computer, or other programmable data processing device, or programmable circuitry, either locally or over a wide area network (WAN), such as a local area network (LAN), the Internet, or the like, to cause the processor or programmable circuitry of the general-purpose computer, special purpose computer, or other programmable data processing device to execute the computer-readable instruction to generate means for the processor or programmable circuitry to perform the operation specified in the flowcharts or block diagrams. Examples of the processor include a computer processor, a processing unit, a microprocessor, a digital signal processor, a controller, a microcontroller, and the like.

Although the present disclosure has been described with reference to the embodiments, the technical scope of the disclosure is not limited to the scope described in the embodiments. It is apparent to those skilled in the art that various modifications or improvements can be made to the above embodiments. It is apparent from the description of the claims that a mode to which such modifications or improvements are made can also be included in the technical scope of the present disclosure.

It should be noted that the order of execution of each processing such as operation, procedure, steps, and stages in the devices, systems, programs, and methods indicated in the claims, the specification, and the drawings may be implemented in any order unless "before", "prior to", or the like, is specifically stated, and unless the output of the previous processing is used in the later processing. Even if the operation flow in the claims, the specification, and the drawings is described using "First", "Next", and the like, for convenience, it does not mean that it is essential to perform in this order.

The disclosures of Japanese Patent Application No. 2023-050632 filed on March 27, 2023, Japanese Patent Application No. 2023-125787 filed on August 1, 2023, Japanese Patent Application No. 2023-135397 filed on August 23, 2023, and Japanese Patent Application No. 2023-143611 filed on September 5, 2023 are incorporated herein by reference in their entirety.

All documents, patent applications, and technical standards described in this specification are incorporated herein by reference to the same extent as if each document, patent application, and technical standard were specifically and individually indicated to be incorporated by reference.

## Claims

1. A control system of a robot to which a tool is attached according to a job type with respect to an object, and which executes a job on the object, the tool being detachable at a wrist portion of an arm portion that operates in a three-dimensional manner, the control system comprising:
a determination unit that determines a job type with respect to the object; and
a control unit that controls operation of attaching the tool corresponding to the job type determined by the determination unit and controls operation according to the job type.

2. The control system of the robot according to claim 1, comprising:
a plurality of arm portions to which at least the tool is attachable, wherein
a tool according to the job type with respect to the object is selectively attached to one arm portion, and
an auxiliary work tool capable of executing auxiliary work of main work on the object is attached to another arm portion.

3. The control system of the robot according to claim 2, wherein the tool according to the job type with respect to the object is selectively attached to the one arm portion, and a monitoring device that monitors a work site in conjunction with work to be executed by the attached tool is attached to the one arm portion.

4. The control system of the robot according to claim 2, wherein the auxiliary work tool has a function of a human hand and holds the object.

5. The control system of the robot according to claim 4, wherein the auxiliary work tool includes a housing portion in which a component according to a job type of the tool to be attached to the one arm portion is housed, and
the control unit executes operation according to the job type using the component housed in the housing portion.

6. The control system of the robot according to claim 5, wherein the control unit replaces the component to be used in the one arm portion with the new component housed in the housing portion in a case in which a predetermined condition is satisfied.

7. The control system of the robot according to claim 2, wherein the auxiliary work tool includes a monitoring sensor tool that performs monitoring specialized for the main work on the object.

8. The control system of the robot according to claim 1, wherein the robot is a humanoid robot.

9. The control system of the robot according to claim 1, wherein the robot is mounted on a vehicle supported on a floor surface via drive wheels.

10. The control system of the robot according to claim 1, wherein the determination unit performs determination based on information from a sensor unit mounted on the tool and including a camera that captures an image of the object to identify a type of the object, and a motion processing unit that specifies a position of the object.

11. The control system of the robot according to claim 1, comprising:
an individual control unit that performs operation control of each of the robots, the individual control unit performing control to attach the tool according to the job type determined by the determination unit and controlling operation according to the job type; and
a coordination control unit that performs operation control of causing a plurality of the robots to coordinate with each other, at least causes one of a plurality of the robots to hold the object and causes a plurality of the robots to execute operation of a plurality of job types on the held object in time series.

12. The control system of the robot according to claim 11, wherein the tool for holding the object has a function of a human hand and holds the object by gripping.

13. The control system of the robot according to claim 11, wherein in a case in which a plurality of the robots is caused to execute work, the coordination control unit causes a plurality of the robots to execute operation of a plurality of job types at the same time on condition that interference does not occur.

14. The control system of the robot according to claim 11, wherein when one robot among the robots holds the object with a tool attached to one arm portion, in a case in which it is necessary to replace a tool attached to the other arm portion, the coordination control unit performs control such that another robot holds the object instead of the one robot.

15. A robot to which a tool is attached according to a job type with respect to an object, and which executes a job on the object, the tool being detachable at a wrist portion of an arm portion that operates in a three-dimensional manner, the robot comprising
a sensing unit that specifies positions of the object and the tool.

16. The robot according to claim 15, wherein the robot includes a plurality of arm portions which operates in a three-dimensional manner and to which at least a work tool is attachable, and executes a job on an object,
a tool according to a job type with respect to the object is selectively attached to one arm portion, and a monitoring device that monitors a work site in conjunction with work to be executed by the attached tool is attached to the one arm portion, and
an auxiliary work tool capable of executing auxiliary work of main work on the object is attached to another arm portion.

17. A control program of a robot that causes a computer to operate as each unit according to any one of claims 1 to 14.
